# DEMANDE DE BREVET EUROPEEN

(11) **EP 3 920 383 A1**
(43) Date de publication de la demande: **08.12.2021**
(21) Numéro de dépôt: 21187088.6
(22) Date de dépôt: 26.04.2017
(51) Int. Cl.: H02K 9/06, H02K 15/00

(54) **MACHINE ELECTRIQUE TOURNANTE MUNIE D'UN CHIGNON**

(30) Priorité: 25.05.2016 FR 1654707
(62) Demande divisionnaire de: 17168132.3
(71) Demandeur: VALEO EQUIPEMENTS ELECTRIQUES MOTEUR, 94046 Créteil Cedex (FR)
(72) Inventeur: DESENCLOS, Stéphane, 62630 Etaples-sur-Mer (FR); DELCROIX, Eric, 62630 Etaples-sur-Mer (FR); POUCHELLE, Benjamin, 62630 Etaples-sur-Mer (FR); DOFFE, Ludovic, 62630 Etaples-sur-Mer (FR); KADIRI, Mostafa, 62630 Etaples-sur-Mer (FR); AZOULAY, Patrice, 95892 CERGY PONTOISE (FR)
(74) Mandataire: Valeo Powertrain Systems

(57) **Abrégé**

Machine électrique (100) tournante munie d'un axe X, ladite machine comprenant une partie avant (16) et une partie arrière (17) par rapport à l'axe X, ladite machine comprenant :
- un rotor (2) d'axe X qui comprend deux surfaces axiales (81, 82) d'extrémité qui sont munies de pales (26) de ventilateur, les deux surfaces axiales étant respectivement situées du côté de la partie avant (16) et du côté de la partie arrière (17) de la machine ;
- un stator (50) qui comprend un corps de stator (4) ayant des encoches (93) et entourant ledit rotor (2), ledit stator (50) comprenant un bobinage (5) installé dans lesdites encoches formant un chignon avant (51) qui s'étend à partir d'une extrémité axiale du corps de stator vers la partie avant (16) de la machine et un chignon arrière (53) qui s'étend à partir d'une autre extrémité axiale du corps de stator (4) vers la partie arrière (17) de la machine (100);
- un carter (1) dans lequel ont placés le rotor et le stator,

Il est prévu que le chignon avant (51) masque totalement les pales (26) de la surface axiale (81) située du côté avant de la machine selon une direction perpendiculaire à l'axe X.

## Description

### DOMAINE TECHNIQUE DE L'INVENTION

La présente invention porte sur une machine électrique tournante munie d'un chignon avec une forme améliorée, la machine étant destinée à être installé dans un véhicule automobile pour fonctionner avec un moteur thermique ou pour assurer la propulsion du véhicule automobile. L'invention concerne également un procédé de construction d'une telle machine électrique tournante.

### ARRIERE PLAN TECHNOLOGIQUE

De manière connue, les machines électriques tournantes comportent deux parties coaxiales à savoir un rotor et un stator entourant le corps du rotor.

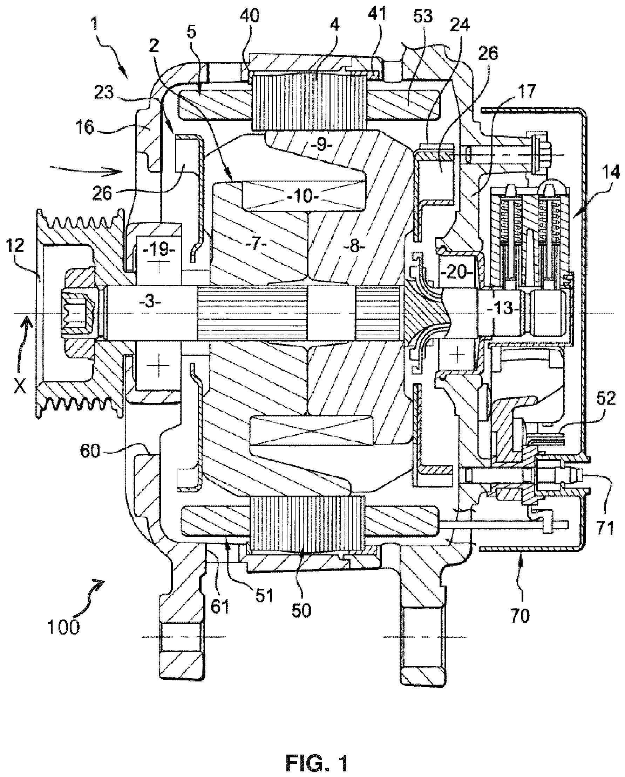

En se reportant à la figure 1, on a représenté un exemple d'une telle machine électrique tournante référencée 100, dans le cas d'un alternateur à ventilation interne du type polyphasé pour véhicule automobile à moteur thermique fonctionnant en mode alternateur. Bien entendu l'alternateur peut aussi être réversible et consister en un alterno-démarreur fonctionnant également en mode moteur électrique notamment pour démarrer le moteur thermique du véhicule comme décrit dans le document FR A 2 745 445 pour assurer la propulsion du véhicule automobile.

Lorsque la machine 100 fonctionne en mode alternateur elle transforme de l'énergie mécanique en énergie électrique comme tout alternateur. Lorsque la machine fonctionne en mode moteur électrique, notamment en mode démarreur pour démarrer le moteur thermique du véhicule, elle transforme de l'énergie électrique en énergie mécanique.

Cette machine 100 comporte essentiellement un carter 1 et, à l'intérieur de celui-ci, un rotor 2 solidaire en rotation d'un arbre central 3, appelé arbre de rotor, et un stator 50 de forme annulaire, qui entoure le rotor 2 avec présence d'un entrefer et qui comporte un corps 4 en forme d'un paquet de tôles doté d'encoches, par exemple du type semi-fermé, pour le montage d'un bobinage de stator 5 formant de part et d'autre du corps 4 de stator 50, à chaque extrémité axiale de celui-ci, un chignon avant 51 et un chignon arrière 53 qui sont saillants axialement.

Ce bobinage 5 comporte par exemple un jeu d'enroulements triphasé en étoile ou en triangle, dont les sorties sont reliées à un pont redresseur, visible partiellement en 52, comportant des éléments redresseurs tels que des diodes ou des transistors du type MOSFET, notamment lorsque la machine consiste en un alterno- démarreur.

Les enroulements du bobinage 5 sont obtenus à l'aide d'un fil continu, électriquement conducteur, revêtu d'une couche électriquement isolante, tel que de l'émail, et monté dans les encoches concernées du corps 4 du stator 50 via des isolants d'encoches (non visibles).

Selon une autre variante, le bobinage 5 comporte deux jeux d'enroulements triphasés pour former un dispositif d'enroulements composites de stator, les enroulements étant décalés de trente degrés électriques comme décrit par exemple dans les documents US-A1 -2002/0175589, et FR-A-2.784.248. Dans ce cas il est prévu deux ponts redresseurs et toutes les combinaisons d'enroulements triphasés en étoile et/ou en triangle sont possibles. En variante le bobinage du stator est du type pentaphasé.

D'une manière générale l'alternateur est du type polyphasé et le ou les ponts redresseurs permettent notamment de redresser le courant alternatif produit dans les enroulements du stator 50 en un courant continu notamment pour charger la batterie du véhicule automobile et alimenter les charges et les consommateurs électriques du réseau de bord du véhicule automobile.

Le rotor 2, de forme annulaire, est réalisé dans l'exemple représenté sous la forme d'un rotor à griffes, comme décrit par exemple dans les documents US-A1 -2002/01 75589, comprenant deux roues polaires 7,8 ici axialement juxtaposées et présentant chacune un flasque transversal de forme annulaire pourvu à sa périphérie extérieure de griffes 9.

Chaque griffe 9 comporte un tronçon d'enracinement d'orientation transversale dans le plan du flasque concerné. Ce tronçon d'enracinement est prolongé à sa périphérie extérieure par une dent d'orientation globalement axiale avec présence d'un chanfrein entre la dent et le tronçon d'enracinement

Un entrefer annulaire existe entre la face périphérique extérieure des dents des griffes 9 et la périphérie intérieure du corps 4 du stator 50.

Les dents sont globalement de forme trapézoïdale ou triangulaire. Les dents d'une roue polaire 7, 8 sont dirigées axialement vers le flasque de l'autre roue polaire 8, 7 ; la dent d'une roue 7, 8 pénétrant dans l'espace existant entre deux dents adjacentes de l'autre roue 7, 8 de sorte que les dents des roues 7, 8 soient imbriquées. Pour plus de précisions on se reportera au document EP 051 5 259.

Un bobinage d'excitation 10 est implanté axialement entre les flasques des roues 7, 8. Il est porté par une partie de rotor 2 en forme d'un noyau annulaire cylindrique coaxial à l'arbre 3. Le noyau de la figure 1 est constitué de deux tronçons axialement distincts dont chacun est réalisé venu de matière avec une roue polaire 7,8 associée. Selon une variante non représentée, le noyau central est constitué d'une seule pièce et il est distinct des roues polaires 7, 8 qui sont agencées axialement de part et d'autre du noyau.

Le bobinage 10 est donc implanté dans l'espace délimité radialement par les griffes 9 des roues 7,8 et le noyau central.

Les roues 7, 8 et le noyau sont de préférence en matière ferromagnétique et sont traversées de manière coaxiale par l'arbre de rotor 3 également en matériau ferromagnétique. Ces roues 7, 8 sont solidaires de l'arbre 3. A cet effet, chaque roue 7, 8 comporte un alésage central qui traverse axialement le flasque et prolonge l'alésage de la partie du noyau concerné. L'arbre 3 présente des portions moletées (non référencées) et est emmanché à force dans les alésages précités du noyau et des roues 7, 8 en sorte, qu'il taille des sillons par l'intermédiaire de ses portions moletées. L'arbre 3 est ainsi solidaire en rotation et axialement des roues, une entretoise, non référencée, étant intercalée entre la roue 7 et un roulement 19 décrit ci-après.

L'axe de l'arbre 3 constitue l'axe X de la machine. Le fil du bobinage 10 est bobiné sur un support en matière électriquement isolante (non représenté) monté, de préférence à force, sur la périphérie extérieure du noyau.

Lorsque le bobinage d'excitation 10 est activé, c'est-à-dire alimenté électriquement, les roues 7, 8 et le noyau, sont magnétisés et le rotor 2 devient un rotor inducteur avec formation de pôles magnétiques au niveau des griffes 9 des roues 7, 8.

Ce rotor inducteur 2 crée un courant induit alternatif dans le stator 50 induit lorsque l'arbre 3 tourne.

L'arbre 3 du rotor 2 porte à son extrémité avant un organe de transmission de mouvement 12, ici une poulie 12 appartenant à un dispositif de transmission de mouvements par l'intermédiaire d'au moins une courroie (non représentée) entre l'alternateur et le moteur thermique du véhicule automobile. Cet arbre porte à son extrémité arrière des bagues collectrices 13 reliées par des liaisons filaires (non représentées) aux extrémités du bobinage d'excitation 10 du rotor 2.

En variante la poulie 12 est remplacée par un engrenage et le dispositif de transmission est à chaîne et/ou à engrenages.

Des balais appartiennent à un porte-balais représenté de façon générale à la référence 14 et ils sont disposés de façon à frotter sur les bagues collectrices 13, afin d'alimenter le bobinage 10 en courant électrique. Le porte-balais 14 est relié à un régulateur de tension (non représenté).

Le carter 1 dans lequel sont placés le rotor 2 et le stator 50 est ici en deux parties, à savoir un flasque avant 16 adjacent à la poulie 12 et un flasque arrière 17 portant le porte-balais 14 et le plus souvent le ou les ponts redresseurs et le régulateur de tension. Les flasques 16, 17 de forme annulaire, par exemple à base d'aluminium, sont de forme creuse et portent chacun centralement un roulement à billes respectivement 19 et 20 pour le montage à rotation de l'arbre 3 du rotor 2. Les flasques sont assemblés entre eux à l'aide de tirants ou de vis comme visible par exemple à la figure 1 du document EP 0515 259 précité. En d'autres termes, Le carter 1 de la machine 100 comprend le flasque avant 16 également appelé palier avant et le flasque arrière 17 également palier arrière.

A la figure 1 on prévoit à la périphérie externe du corps 4 du stator, en forme de paquet de tôle, un système élastique pour filtrer les vibrations, avec à l'avant un joint plat 40 et à l'arrière des tampons 41, de la résine souple et thermo conductrice étant intercalée entre le flasque avant et le corps de stator pour évacuer la chaleur.

En variante il n'est pas prévu de joints. Dans tous les cas le stator est porté de manière fixe par le carter 1, tandis que le rotor 2 est porté centralement à rotation par le carter 1 via les roulements 19, 20.

En variante le carter est en trois parties, les flasques 16, 17 étant disposés de part et d'autre d'une partie centrale portant le corps de stator. Les flasques sont assemblés à la partie intermédiaire par exemple par vissage.

L'alternateur comporte aussi des moyens pour son refroidissement. A cet effet, à la figure 1, les flasques 16, 17 sont ajourés pour permettre le refroidissement de l'alternateur par circulation d'air et le rotor 2 porte au moins à l'une de ses extrémités axiales un ventilateur destiné à assurer cette circulation de l'air. Ici un premier ventilateur 23 est prévu sur la face frontale avant du rotor 2 et un deuxième ventilateur 24, sur la face arrière du rotor 12. Chaque ventilateur 23, 24 est de forme annulaire et est pourvu d'une pluralité de pâles 26 et est fixé sur les faces radiales externes des flasques des roues 7, 8.

Les ventilateurs sont par exemple métalliques et sont obtenus avec leur pâles 26 par découpe et pliage. Les ventilateurs 23, 24 sont par exemple du type centrifuge ou hélico-centrifuge.

En référence à la figure 1, l'air est aspiré par des ouvertures 60 du flasque avant entourant la poulie 12 à l'avant du flasque puis est majoritairement éjecté de manière centrifuge par les pales 26 et passe dans l'espace entre le chignon avant 51 et le flasque avant 16 pour refroidir le chignon avant et finalement sortir par des ouvertures 61 sur la périphérie radiale externe du flasque avant. Le flasque arrière 17 présente également une pluralité d'orifices d'entrée et de sortie d'air.

A la figure 1, le porte-balais 14 et le régulateur de tension, solidaires du flasque 17, sont coiffé par un capot 70, solidaire du flasque arrière 17 en étant fixé ici sur celui -ci, de manière connue, par encliquetage sur des goujons 71 solidaires du flasque arrière. Ce capot 70 présente également des orifices d'entrée d'air, non visibles à la figure 1.

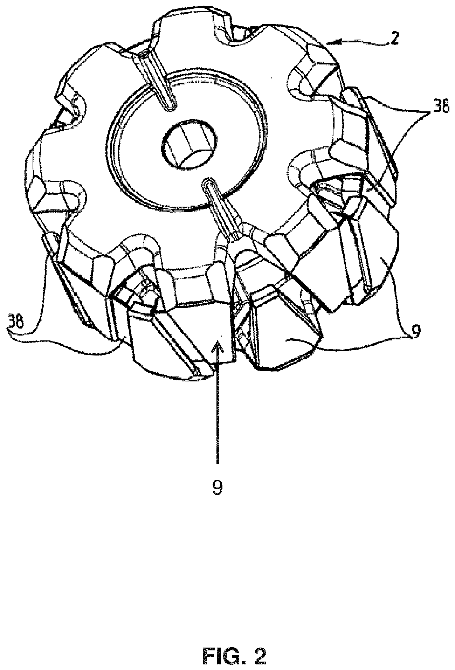

La figure 2 illustre un rotor à griffes selon l'état de la technique. Il comprend une paire de roues 7 et 8 imbriquées. Les roues 7 et 8 comprennent des griffes 9. De manière facultative le rotor 2 comprend des aimants inter polaires 38. Le rotor 2 illustré sur la figure 2 comprend 8 paires de pôles.

Cette machine donne satisfaction néanmoins il peut être souhaitable d'améliorer encore celle-ci notamment en atténuant le bruit qu'elle génère lorsqu'elle est en fonctionnement, entrainée par le moteur thermique ou dans le cas d'un alterno-démarreur lorsqu'elle fonctionne en mode moteur.

### OBJET DE L'INVENTION

L'invention a pour objet de répondre à ce souhait tout en remédiant à au moins un de ces inconvénients précités.
Suivant l'invention, il est proposé une machine électrique tournante munie d'un axe X, ladite machine comprenant une partie avant et une partie arrière par rapport à l'axe X, ladite machine comprenant :
- un rotor d'axe X qui comprend deux surfaces axiales d'extrémité qui sont munies de pales de ventilateur permettant un écoulement d'un air de refroidissement, les deux surfaces axiales étant respectivement situées du côté de la partie avant et du côté de la partie arrière de la machine ;
- un stator qui comprend un corps de stator ayant des encoches et entourant ledit rotor, ledit stator comprenant un bobinage installé dans lesdites encoches formant un chignon avant qui s'étend à partir d'une extrémité axiale du corps de stator vers la partie avant de la machine et un chignon arrière qui s'étend à partir d'une autre extrémité axiale du corps de stator vers la partie arrière de la machine;
- un carter dans lequel ont placés le rotor et le stator,

Selon une caractéristique générale, le chignon avant masque totalement selon une direction perpendiculaire à l'axe X les pales de la surface axiale située du côté avant de la machine. Ainsi le chignon avant joue le rôle de bouclier sonore vis à vis des bruits générés par les pales de la surface axiale située du coté avant de la machine. On permet ainsi que ces bruits soient atténués par le chignon. Il s'agit d'une solution qui permet de réduire le bruit sans compromettre les performances de la machine et notamment son refroidissement et le courant qu'elle débite si elle fonctionne en mode alternateur. Par exemple, on peut prévoir que les pales de la surface axiale située du coté avant de la machine permettent une éjection centrifuge de l'air de refroidissement.

Selon d'autres caractéristiques prises isolément ou en combinaison :
- le niveau selon l'axe X du chignon avant est supérieur ou égal au niveau selon l'axe X des pales masquées. Ainsi, on agit sur la hauteur du chignon avant pour qu'il puisse jouer le rôle de bouclier.
- les chignons comprennent des fils munis de deux portions axiales s'étendant selon l'axe X et d'une portion transversale s'étendant dans un plan perpendiculaire à l'axe X, le chignon avant formant des espacements situés entre les portions transversales et le corps de stator et lesdits espacements permettent un passage de l'air de refroidissement. Ainsi, on peut augmenter la surface du flux et à débit constant réduire la vitesse de l'écoulement.
- le bobinage installé dans les encoches est décalé par rapport au corps de stator de sorte que le chignon avant masque totalement les pales de la surface axiale située du côté avant de la machine tandis que les pales de la surface axiale située du côté arrière de la machine dépassent axialement du chignon arrière. Ainsi, il est inutile d'augmenter le développé du bobinage. Cela évite d'avoir à consommer du cuivre supplémentaire et d'augmenter la résistance du bobinage statorique.
- le chignon avant présente une forme permettant une vitesse d'écoulement de l'air de refroidissement réduite pour un débit d'écoulement donné. Par exemple, le chignon comporte une tête ayant une forme conique. On assure ainsi un compromis entre la conservation de la fonction de bouclier sonore et l'augmentation de la surface du flux.
- la machine comprend une fenêtre d'écoulement de l'air de refroidissement qui est définie entre le carter et le chignon avant, l'épaisseur du carter étant réduite au niveau de cette fenêtre pour permettre une augmentation de ladite fenêtre. On permet ainsi une augmentation de la surface du flux de l'air de refroidissement et donc une réduction de la vitesse d'écoulement.
- le ratio R1 défini comme la division de la différence entre la hauteur du chignon avant et la hauteur du chignon arrière par la hauteur du corps de stator est compris entre 1 et 5%. On obtient ainsi un ratio optimal permettant d'obtenir les meilleures performances du point de vue de la réduction de bruit sans atténuer le refroidissement de la machine.
- le ratio R2 du diamètre externe sur le diamètre interne est compris entre 1.30 et 1.32.
- le rotor comprend un nombre de paires de pôles différent de celui du nombre de pales de chacune des deux surfaces axiales d'extrémités. On permet ainsi une distribution du bruit sur plusieurs ordres d'harmonique, ce qui réduit le bruit globalement généré. Par exemple, le nombre de paires de pôle est de 8 tandis que le nombre de pales de la surface d'axiale d'extrémité avant est 11 et le nombre de pales de la surface d'axiale d'extrémité arrière est 13.

L'invention a également pour objet un procédé de fabrication d'une machine électrique tournante munie d'un axe X, ladite machine comprenant une partie avant et une partie arrière par rapport à l'axe X et comprenant en outre :
- un rotor d'axe X qui comprend deux surfaces axiales d'extrémité qui sont munies de pales de ventilateur permettant un écoulement d'un air de refroidissement, les deux surfaces axiales étant respectivement situées du côté de la partie avant et du côté de la partie arrière de la machine;
- un stator qui comprend un corps de stator ayant des encoches et entourant ledit rotor,
le procédé comprenant une étape de bobinage de fils de cuivre dans lesdites encoches de manière à former un chignon avant qui s'étend à partir d'une extrémité axiale du corps de stator vers la partie avant de la machine et un chignon arrière qui s'étend à partir d'une autre extrémité axiale du corps de stator vers la partie arrière de la machine.

Selon une caractéristique générale, le procédé comprend en outre après l'étape de bobinage, une étape de décalage selon une direction axiale du bobinage par rapport au corps de stator de sorte que le chignon axial avant masque totalement les pales de la surface axiale située du côté avant de la machine selon une direction perpendiculaire à l'axe X. On propose ainsi un procédé facile à mettre en œuvre et insérable dans les étapes actuelles de fabrication.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, représente une vue en coupe d'une machine électrique tournante selon l'état de la technique ;
la figure 2, déjà décrite, représente un rotor en perspective selon l'état de la technique;
la figure 3 représente une vue en coupe d'une machine électrique tournante sous la forme d'un alternateur selon un premier mode de réalisation de l'invention;
la figure 4 représente une vue d'un chignon en perspective d'une machine électrique tournante selon l'invention;
la figure 5 représente un corps de stator pour la machine électrique tournante selon l'invention;
la figure 6 représente des courbes d'un niveau sonore du bruit en fonction de la vitesse de rotation et du type de machine;
la figure 7 représente une vue en coupe d'une machine électrique tournante sous la forme d'un alternateur selon un deuxième mode de réalisation de l'invention; et
la figure 8 représente un procédé selon l'invention.

Les éléments identiques, similaires, ou analogues conservent la même référence d'une figure à l'autre.

### DESCRIPTION D'EXEMPLES DE REALISATION DE L'INVENTION

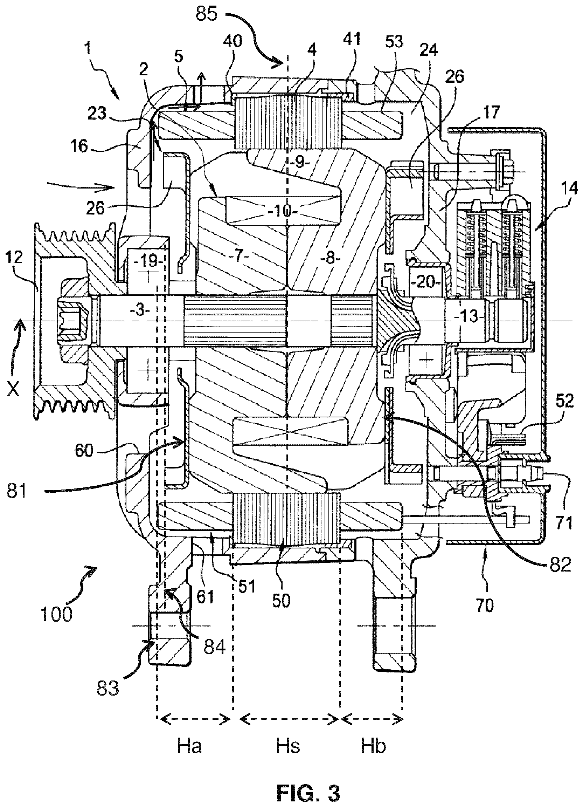

La figure 3 illustre une machine électrique 100 tournante munie d'un axe X selon l'invention.

Cette machine se distingue de la machine illustrée sur la figure 1 notamment en ce que le chignon 51 masque totalement les pales 26 du ventilateur 23.

La machine 100 comprend une première partie formée notamment par le flasque avant 16 et une deuxième partie formée notamment par le flasque arrière 17. Ces deux parties sont nommées avant et arrière en fonction de leur position par rapport à l'axe X. Plus précisément la partie avant est située du côté de la poulie 12 tandis que la partie arrière est située du côté du capot électrique 70.

Le rotor 2 est d'axe X et comprend deux surfaces axiales d'extrémité 81 et 82 qui sont munies de pales 26 de ventilateur 23, 24 permettant un écoulement d'un air de refroidissement par exemple par éjection centrifuge. Les deux surfaces 81 et 82 sont respectivement situées du côté de la partie avant et du côté de la partie arrière de la machine. Les deux surfaces axiales 81 et 82 sont chacune située dans l'un des deux plans perpendiculaires à l'axe X qui délimitent le rotor 2.

Le stator 50 comprend un bobinage 5 installé dans les encoches formant un chignon avant 51 qui s'étend à partir d'une extrémité axiale du corps de stator 4 vers la partie avant de la machine et un chignon arrière 53 qui s'étend à partir d'une autre extrémité axiale du corps de stator vers la partie arrière de la machine 1.

Dans la machine électrique 100 illustrée sur la figure 3, le chignon avant 51 masque totalement les pales 26 de la surface axiale 81 située du côté avant de la machine selon une direction perpendiculaire à l'axe X.

Pour cela, le niveau selon l'axe X du chignon avant 51 est supérieur ou égal au niveau selon l'axe X des pales masquées 26. On définit un plan 85 passant entre les deux roues 7 et 8 du rotor 2 représenté par une droite en pointillée sur la figure 3.

On définit un plan 83 comprenant l'extrémité axiale du chignon avant 51, ladite extrémité axiale correspondant au point du chignon 51 le plus éloigné du corps de stator 4 selon l'axe X. Ce plan est représenté par une droite en pointillée sur la figure 3.

On définit un plan 84 comprenant l'extrémité axiale des pales 26, ladite extrémité axiale correspondant au point des pales 26 le plus éloigné de la roue 7 selon l'axe X. Ce plan est représenté par une droite en pointillée sur la figure 3.

Ainsi, on entend par niveau du chignon 51 la distance entre le plan 83 et le plan 85 et de même, on entend par niveau des pales 26 de la surface axiale 81, la distance entre le plan 84 et le plan 85. Par exemple, on peut prévoir que la différence entre le niveau du chignon 51 et le niveau des pales 26 de la surface axiale 81 est comprise entre 0 et 1mm.

Le corps de stator 4 est par exemple formé par un paquet de tôles présentant une hauteur Hs définie comme la distance entre deux plans perpendiculaires à l'axe X délimitant le corps de stator.

Les chignons avant 51 et arrière 53 présentent chacun une hauteur définie comme la distance entre le plan perpendiculaire à l'axe X comprenant le point du chignon le plus éloigné du corps de stator et un des deux plans perpendiculaires à l'axe X délimitant le corps de stator.

Selon un mode de réalisation de l'invention, la hauteur Ha du chignon avant 51 est de 23mm, la hauteur Hb du chignon arrière 53 est de 22mm et la hauteur Hs du paquet de tôles formant le corps 4 du stator 50 est de 35mm.

Ainsi, en définissant un ratio R1, permettant de rapporter la différence entre le chignon avant et le chignon arrière par rapport à la hauteur du corps de chignon 4, on obtient R1= 23-22/35= 0.0285.

Selon un mode de réalisation de l'invention, on peut prévoir d'ajuster la hauteur du chignon avant par rapport au chignon arrière de telle sorte que le ratio R1 est compris entre 1 et 5%, par exemple entre 2 et 4%.

Cette différence de niveau entre le chignon avant 51 et le chignon arrière 53 peut être obtenue à l'aide d'un décalage du bobinage 5 par rapport au corps de stator.

Selon un mode de réalisation illustré sur la figure 3, le bobinage 5 installé dans les encoches est décalé par rapport au corps de stator de sorte que le chignon avant 51 masque totalement les pales 26 de la surface axiale 81 située du côté avant de la machine tandis que les pales 26 de la surface axiale située 82 du côté arrière de la machine dépassent axialement du chignon arrière 53.

En masquant les pales 26 de la surface axiale 81 située du côté avant de la machine, on réduit fortement les bruits générés par l'écoulement d'air centrifugé par ces pales 26.

En effet, le chignon avant va ainsi jouer le rôle d'un bouclier des bruits des écoulements d'air centrifuges, ces écoulements d'air permettant par circulation d'un débit d'air sur le chignon avant 51 notamment, le refroidissement de la machine.

A des fins d'illustrations, on a représenté sur la figure 3, l'écoulement de l'air de refroidissement dans la partie avant de la machine. Cet écoulement comprend une aspiration de l'air de refroidissement par les ouvertures 60 du flasque, son éjection centrifuge par les pales 26, puis son passage dans l'espace entre le chignon avant 51 et le flasque avant 16 pour refroidir le chignon avant, et enfin sa sortie par les ouvertures 61.

Le chignon arrière 53 est moins critique pour le bruit, car les écoulements sont plus erratiques en raison notamment de la présence de la partie électronique à refroidir et d'écoulements axiaux qui rendent les écoulements centrifuges moins prépondérants. Ainsi, même si du fait du décalage vers l'avant du bobinage 5, le chignon arrière 53 masque moins les pales 26 de la surface axiale 82 située du côté arrière de la machine, on obtient une réduction du bruit global.

Parmi les bruits générés par un rotor en rotation, certaines harmoniques liées à la géométrie du rotor sont prépondérantes. Notamment, on peut citer le nombre de pales du rotor sur la surface axiale 81 située du côté avant, le nombre de pales du rotor sur la surface axiale 8 située du côté arrière, le nombre de paires de pôles. Il est prévu selon l'invention d'éviter que ces nombres soient identiques ce qui induirait une sommation de plusieurs harmoniques de même ordre.

En effet, pour un volume sonore des composantes de bruit donné, avec plusieurs composantes de bruit de même ordre d'harmonique le volume sonore perçu est plus important qu'avec plusieurs composantes de bruit ayant des ordres d'harmonique différentes.

Ainsi, pour éviter cela, on peut prévoir que le rotor 2 comprend un nombre de paires de pôles différent de celui du nombre de pales 26 des deux surfaces axiales 81, 82 d'extrémités respectivement. Par exemple, le nombre de paires de pôle est 8, tandis que le nombre de pales est 11 ou 13.

La performance du refroidissement de la machine et notamment du chignon avant 51 est liée au débit d'air de refroidissement soufflé par les pales 26 de la surface axial située du côté avant de la machine. Par contre, le bruit généré par ces écoulements est directement lié à la vitesse de l'air. Ainsi, afin de minimiser ce bruit, on peut prévoir notamment que le chignon avant 51 présente une forme permettant une vitesse d'éjection de l'air réduite pour un débit d'éjection donné. Ainsi, il est possible en conservant un débit d'air donné, de minimiser la vitesse d'écoulement de l'air de refroidissement.

Pour cela, on peut par exemple prévoir une forme de chignon permettant d'augmenter la surface du flux d'air. En effet, pour un débit donné, on peut ainsi baisser la vitesse en augmentant la surface du flux.

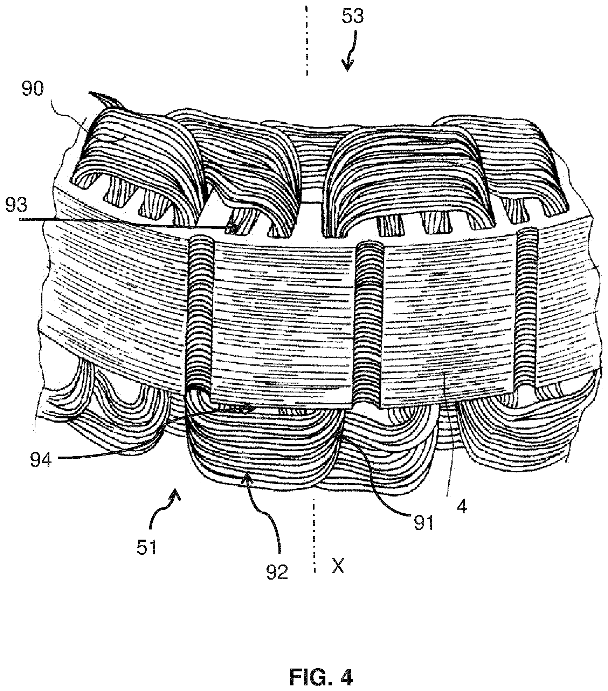

La figure 4 illustre un détail du stator 50 selon l'invention. Il comprend un corps de stator 4, un bobinage 5 installé dans des encoches 93 le bobinage formant le chignon avant 51 et le chignon arrière 53.

Il est prévu que les chignons comprennent des fils 90 munis de deux portions axiales 91 s'étendant selon l'axe X et d'une portion transversale 92 s'étendant dans un plan perpendiculaire à l'axe X, le chignon avant 51 formant des espacements 94 situés entre les portions transversales et le corps de stator 4.

Ces espacements 94 permettent un passage de l'air. Ainsi, on obtient une surface du flux qui augmente et donc une réduction de la vitesse d'écoulement et du bruit pour un débit donné.

Dans le mode de réalisation illustré sur la figure 4, les chignons comprennent des groupes de fils qui s'étendent entre deux encoches. Les fils de ces groupes de fils comprennent les deux portions axiales 91 et la portion transversale 92. Ainsi, ces groupes de fils présentent sensiblement la forme d'un rectangle.

On peut prévoir selon un autre mode de réalisation, que la forme de chacun de ces groupes est triangulaire ou conique, ce qui permet d'augmenter sensiblement la surface du flux des écoulements centrifuge afin de limiter leur vitesse. Toutefois, dans ce cas un compromis est à respecter car le rôle de bouclier sonore du chignon peut être limité par ces formes. A cet effet, on peut prévoir que le chignon 51 comporte une tête ayant une forme conique, la tête étant la partie du chignon la plus éloignée axialement du corps de stator 4. La tête comprend l'extrémité axiale du chignon avant 51. Ainsi on obtient un bon compromis entre la diminution de la vitesse et la conservation de la fonction de bouclier.

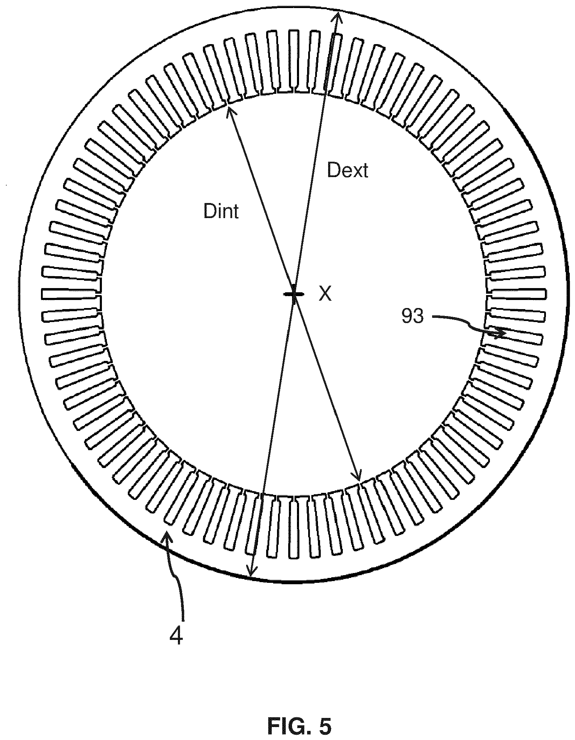

La figure 5, représente le stator 50 selon un mode de réalisation.

Ce stator comprend le corps de stator 4 muni d'encoches 93 avec des pieds de dent. Il est délimité par un diamètre interne Dint et un diamètre externe Dext. Selon le mode de réalisation, il comprend 72 encoches, Dint=96 mm et Dext=126mm. On pourrait prévoir d'autres nombres d'encoches par exemple, 36, 48, 60, 84, 96.

Ainsi, en définissant un ratio R2 du diamètre externe sur le diamètre interne, on obtient R2= 126/96 = 1.3125.

Le bruit sonore émis par une machine électrique tournante comprend de nombreuses composantes ayant chacune un ordre. Chacune de ces composantes a un niveau sonore lié à la géométrie des éléments du rotor et/ou du stator. Notamment, le bruit comprend une composante d'ordre 12 qui est liée au nombre de griffes du rotor et au nombre de chignons du stator. Le bruit comprend également une composante d'ordre 11 qui est liée au nombre de pales de ventilateur du rotor. Le bruit présente un niveau sonore qui est la somme des niveaux sonores de toutes ces composantes.

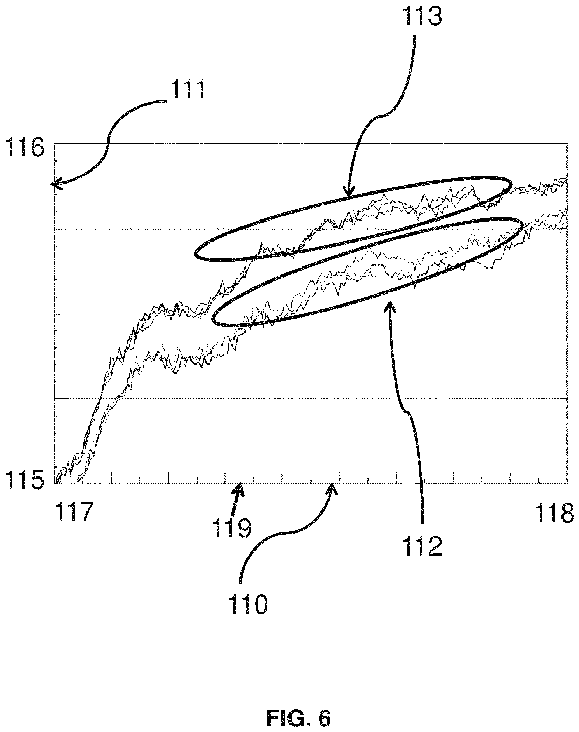

Afin d'évaluer l'avantage procuré par l'invention, il est opportun de comparer un des niveaux sonores du bruit émis par la machine selon l'invention en fonction d'une vitesse de rotation du rotor avec un niveau sonore correspondant du bruit émis par une machine selon l'état de la technique. Pour cela, la figure 6 montre deux groupes de courbes 112 et 113. Le groupe 112 représente un niveau sonore des machine électriques tournantes telles qu'illustrées sur la figure 1 tandis que le groupe 113 représente un niveau sonore des machine électriques tournantes telles qu'illustrées sur la figure 3.

L'axe 110 représente la vitesse de rotation en tours par minutes. Cet axe 110 comprend une borne inférieure 117 d'une valeur de 9000 tours /minute par exemple et une borne supérieure 118 d'une valeur de 18 000 tours/minute par exemple. L'axe 110 est gradué de 1000 en 1000 et comprend des graduations secondaires de 500 en 500. L'axe 110 comprend en outre une valeur intermédiaire 119 de 13204 tours/minute.

L'axe 111 représente la valeur du niveau sonore exprimé en dBW (A). Cet axe 111 comprend une borne inférieure 115 d'une valeur de 85 dBW (A) par exemple et une borne supérieure 116 d'une valeur de 105 dBW (A) par exemple. L'axe 111 est gradué de 1 en 1.

Comme cela est connu de l'homme du métier, une valeur exprimée en dBW (A) indique une évaluation en décibels d'un niveau sonore avec la pondération A de la norme CEI 61672-1. Cette pondération est établie pour tenir compte de la sensibilité moyenne de l'oreille des personnes ayant une audition considérée comme normale, pour chaque bande de fréquences. Cette pondération permet donc d'illustrer un niveau sonore ressenti par un usager du véhicule automobile.

Par exemple, le niveau sonore des groupes de courbes 112 et 113 illustrées sur la figure 6 est celui de la composante d'ordre 11 également appelée harmonique 11.

Ainsi, le groupe de courbes 113 comprend 3 courbes représentant chacune le niveau sonore de l'harmonique d'ordre 11 en fonction de la vitesse de rotation du rotor pour une machine électrique connue de l'homme du métier. Le groupe de courbes 112 comprend 3 courbes représentant le niveau sonore de l'harmonique d'ordre 11 en fonction de la vitesse de rotation du rotor pour des machines électriques dans laquelle le chignon avant 51 masque les pales du ventilateurs de la surface axiale d'extrémité 81 située du côté avant de la machine à l'aide d'un décalage du bobinage 5 vers l'avant de la machine de telle sorte que la hauteur Ha est supérieure d'1 millimètre à la hauteur Hb.

On constate ainsi pour des machines similaires une réduction du niveau de sonore de l'ordre de 3dB pour l'harmonique 11 tandis que le niveau sonore global (non représenté) est réduit d'environ 1 dB.

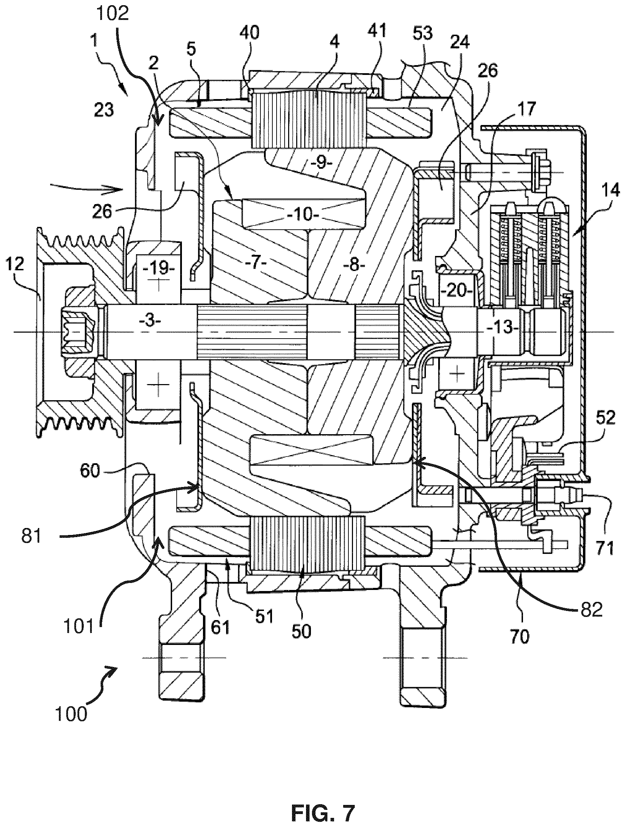

La figure 7 illustre une machine selon un deuxième mode de réalisation de l'invention. Cette machine comprend deux fenêtres d'écoulement 101 et 102 de l'air de refroidissement qui sont définies entre le carter 1 et le chignon avant 51, l'épaisseur du carter 1 étant réduite au niveau de ces fenêtres 101, 102 pour permettre une augmentation de ladite fenêtre. Ainsi, pour un débit d'air donné, on peut réduire la vitesse d'écoulement et ainsi diminuer le bruit.

Par exemple, comme illustré sur la figure 7, on peut réduire l'épaisseur du flasque avant de 1 mm.

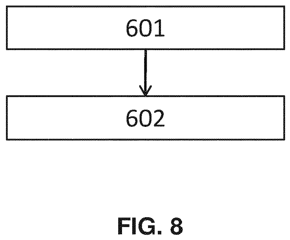

La figure 8 illustre un procédé de fabrication d'une machine électrique 1 tournante telle qu'illustrée sur les figures 3 et 7.

En référence à la figure 3, cette machine électrique est munie d'un axe X, et comprend une partie avant 16 et une partie arrière 17 par rapport à l'axe X.

La machine comprend comprenant en outre un rotor 2 d'axe X comprenant deux surfaces axiales d'extrémité 81, 82 qui sont munies de pales de ventilateur 26 permettant un écoulement d'un air de refroidissement par exemple par éjection centrifuge. Ces deux surfaces axiales 81, 82 sont respectivement situées du côté de la partie avant et du côté de la partie arrière 17 de la machine 1.

La machine comprend en outre un stator 50 qui comprend un corps 4 de stator ayant des encoches 93 et entourant ledit rotor 2.

Le procédé illustré sur la figure 8 comprend:
- une étape de bobinage 601 de fils de cuivre dans lesdites encoches 93 de manière à former un chignon avant 51 qui s'étend à partir d'une extrémité axiale du corps de stator 4 vers la partie avant 16 de la machine 1 et un chignon arrière 53 qui s'étend à partir d'une autre extrémité axiale du corps de stator 4 vers la partie arrière 17 de la machine 1,
- une étape de décalage 602 selon une direction axiale du bobinage par rapport au corps de stator 4 de sorte que le chignon axial avant 51 masque totalement les pales 26 de la surface axiale 81 située du côté avant de la machine 1 selon une direction perpendiculaire à l'axe X.

L'invention est applicable à des rotors présentant des pales 26 plus hautes ou égales au niveau la surface axiale 81 située du côté avant de la machine qu'au niveau de la surface axiale 82 située du côté arrière de la machine. L'invention est également applicable à des rotors présentant des pales 26 plus hautes au niveau la surface axiale 82 située du côté arrière de la machine qu'au niveau de la surface axiale 81 située du côté avant de la machine. L'invention est applicable à tous types de pales de ventilateurs, qu'elles soient centrifuges ou mixtes.

## Revendications

1. Machine électrique (100) tournante munie d'un axe X, ladite machine comprenant une partie avant (16) et une partie arrière (17) par rapport à l'axe X, ladite machine comprenant :
- un rotor (2) d'axe X qui comprend deux surfaces axiales (81, 82) d'extrémité qui sont munies de pales (26) de ventilateur permettant un écoulement d'un air de refroidissement, les deux surfaces axiales (81, 82) étant respectivement situées du côté de la partie avant (16) et du côté de la partie arrière (17) de la machine ;
- un stator (50) qui comprend un corps de stator (4) ayant des encoches (93) et entourant ledit rotor (2), ledit stator (50) comprenant un bobinage (5) installé dans lesdites encoches (93) formant un chignon avant (51) qui s'étend à partir d'une extrémité axiale du corps de stator (4) vers la partie avant (16) de la machine et un chignon arrière (53) qui s'étend à partir d'une autre extrémité axiale du corps de stator (4) vers la partie arrière (17) de la machine (100);
- un carter (1) dans lequel ont placés le rotor et le stator,
**caractérisé en ce que** le chignon avant (51) masque totalement selon une direction perpendiculaire à l'axe X, les pales (26) de la surface axiale (81) située du côté avant de la machine.

2. Machine (100) selon la revendication 1, **caractérisé en ce que** le niveau selon l'axe X du chignon avant (51) est supérieur ou égal au niveau selon l'axe X des pales masquées (26).

3. Machine (100) selon la revendication 1 ou 2, **caractérisé en ce que** les chignons comprennent des fils (90) munis de deux portions axiales (91) s'étendant selon l'axe X et d'une portion transversale (92) s'étendant dans un plan perpendiculaire à l'axe X, le chignon avant formant des espacements (94) situés entre les portions transversales (92) et le corps de stator (4) et **en ce que** lesdits espacements (94) permettent un passage de l'air de refroidissement.

4. Machine (100) selon l'une des revendications précédentes, **caractérisé en ce que** le bobinage (5) installé dans les encoches est décalé par rapport au corps de stator (4) de sorte que le chignon avant (51) masque totalement les pales (26) de la surface axiale (81) située du côté avant de la machine tandis que les pales (26) de la surface axiale située (82) du côté arrière de la machine dépassent axialement du chignon arrière (53).

5. Machine selon l'une des revendications précédentes, **caractérisé en ce que** le chignon avant (51) présente une forme permettant une vitesse d'écoulement de l'air de refroidissement réduite pour un débit d'écoulement donné.

6. Machine selon la revendication précédente, **caractérisé en ce que** le chignon (51) comporte une tête ayant une forme conique.

7. Machine selon l'une des revendications précédentes, **caractérisé en ce qu'**elle comprend une fenêtre d'écoulement de l'air de refroidissement (101, 102) qui est définie entre le carter (1) et le chignon avant (51), l'épaisseur du carter étant réduite au niveau de cette fenêtre (101, 102) pour permettre une augmentation de ladite fenêtre (101, 102).

8. Machine selon l'une des revendications précédentes, **caractérisé en ce que** le ratio R1 défini comme la division de la différence entre la hauteur du chignon avant (Ha) et la hauteur du chignon arrière (Hb) par la hauteur du corps de stator (4) est compris entre 1 et 5%.

9. Machine selon l'une des revendications précédentes, **caractérisé en ce que** le ratio R2 du diamètre externe (Dext) sur le diamètre interne (Dint) est compris entre 1.30 et 1.32.

10. Machine selon l'une des revendications précédentes, **caractérisé en ce que** le rotor (2) comprend un nombre de paires de pôles différent de celui du nombre de pales (26) de chacune des deux surfaces axiales (81, 82) d'extrémités.

11. Machine selon l'une des revendications 1 à 10, dans laquelle les pales (26) sont plus hautes ou égales au niveau de la surface axiale (81) du côté de la partie avant qu'au niveau de la surface axiale (82) située du côté de la partie arrière.

12. Machine selon l'une des revendications 1 à 10, dans laquelle les pales (26) sont plus hautes au niveau de la surface axiale (82) du côté de la partie arrière qu'au niveau de la surface axiale (81) située du côté de la partie avant.

13. Machine selon l'une des revendications précédentes, dans laquelle le ventilateur est de type centrifuge ou hélico-centrifuge ou mixte.

14. Machine selon l'une des revendications précédentes dans laquelle la partie arrière (17) porte un porte-balais (14) et au moins un pont redresseur et un régulateur de tension.

15. Procédé de fabrication d'une machine électrique (100) tournante munie d'un axe X, ladite machine (100) comprenant une partie avant (16) et une partie arrière (17) par rapport à l'axe X et comprenant en outre :
- un rotor (2) d'axe X qui comprend deux surfaces axiales d'extrémité (81, 82) qui sont munies de pales de ventilateur (26) permettant un écoulement d'un air de refroidissement, les deux surfaces axiales (81, 82) étant respectivement situées du côté de la partie avant et du côté de la partie arrière (17) de la machine(100) ;
- un stator (50) qui comprend un corps de stator (4) ayant des encoches (93) et entourant ledit rotor (2),
ledit procédé comprenant une étape de bobinage (601) de fils de cuivre dans lesdites encoches (93) de manière à former un chignon avant (51) qui s'étend à partir d'une extrémité axiale du corps de stator (4) vers la partie avant (16) de la machine (100) et un chignon arrière (53) qui s'étend à partir d'une autre extrémité axiale du corps de stator (4) vers la partie arrière (17) de la machine (100),
**caractérisé en ce que** le procédé comprend en outre après l'étape de bobinage, une étape de décalage (602) selon une direction axiale, du bobinage par rapport au corps de stator (4) de sorte que le chignon axial avant (51) masque totalement les pales (26) de la surface axiale (81) située du côté avant de la machine (100) selon une direction perpendiculaire à l'axe X.
